# EUROPEAN PATENT APPLICATION

(11) **EP 0 761 266 A2**
(43) Date of publication of application: **12.03.1997**
(21) Application number: 96114230.4
(22) Date of filing: 05.09.1996
(51) Int. Cl.: A63F 9/22

(54) **Operator stand for a virtual-reality simulation system**

(30) Priority: 08.09.1995 IT TO950715
(71) Applicant: Cyberfunk Italy S.r.l., 31040 Signoressa (IT)
(72) Inventor: Bortoletto, Gianfranco, 20099 Sesto San Giovanni (IT)
(74) Representative: Jorio, Paolo

(57) **Abstract**

The stand (5) presents a top platform (11) connected by a toroidal bladder (21) to a bottom platform (18), and is centered by means of ties (23); a control stick (32) is connected to the stand by an articulated joint engaging a shaft (33) of the control stick (32) and a control member (59) for controlling displacement of the stand (5) in a virtual-reality environment generated by a computer; and the bladder (21) permits the top platform (11) to tilt elastically in any direction, substantially as a result of a shift in the weight of the operator (6) in response to sensations received from audio-visual means (7, 8) for transmitting audio and visual sensations relative to the virtual-reality environment to the operator.

## Description

The present invention relates to an operator stand for a virtual-reality simulation system.

In virtual-reality simulation systems, such as videogames, a computer simulates what the player would experience on board any of a wide range of imaginary vehicles, which may be controlled by the player to perform various movements in any of several virtual environments: sea, land or space. The movement of the vehicle is perceived by the player via body sensations consistent with what the mind would expect of the simulated event.

Virtual-reality simulation systems are known in which the environmental situation is transmitted to the player by a video, the acoustic situation and any audio comments are transmitted by sound recording readers, and the player normally operates the controls either standing on the floor or from a separate seat.

A major drawback of systems of this sort is that the audio and visual situations transmitted to the player are offset in relation to expectations, i.e. a discrepancy exists between the audio, visual and any other sensorial events transmitted to the player by the simulation system and what the brain would actually expect to receive, thus resulting in discomfort to the player known as simulation sickness or kinetosis.

It is an object of the present invention to provide a straightforward, highly reliable operator stand designed to eliminate the above drawback typically associated with known systems.

According to the present invention, there is provided a stand for supporting the operator of a virtual-reality simulation system comprising programmed generating means for generating a variable virtual-reality environment, and audio-visual transmitting means for transmitting to the operator audio and visual sensations relative to said environment; said stand comprising manual control means for controlling virtual displacement of the stand in said environment; and the stand being characterized by comprising a top platform supported by elastic means permitting elastic inclination of the platform in any direction; said inclination being substantially produced by a shift in the weight of the operator on said platform in response to sensations received from said audio-visual means.

A number of preferred, non-limiting embodiments of the present invention will be described by way of example with reference to the accompanying drawings, in which:
Figure 1 shows a schematic view in perspective of a first embodiment of an operator stand in accordance with the present invention;
Figure 2 shows a half section of the Figure 1 stand;
Figure 3 shows a larger-scale section of a detail in Figure 2;
Figure 4 shows a schematic side view of a variation of the Figure 1 stand;
Figure 5 shows a schematic side view of a further embodiment of a stand in accordance with the present invention;
Figure 6 shows a partial half section of the Figure 5 stand;
Figure 7 shows a half section of a variation of the Figure 6 stand;
Figure 8 shows a half section of a further embodiment of a stand in accordance with the present invention;
Figure 9 shows a larger-scale partial section along line IX-IX in Figure 8;
Figure 10 shows a larger-scale partial half section of a detail of the Figure 8 stand;
Figure 11 shows a partial half section of a further embodiment of a stand in accordance with the present invention.

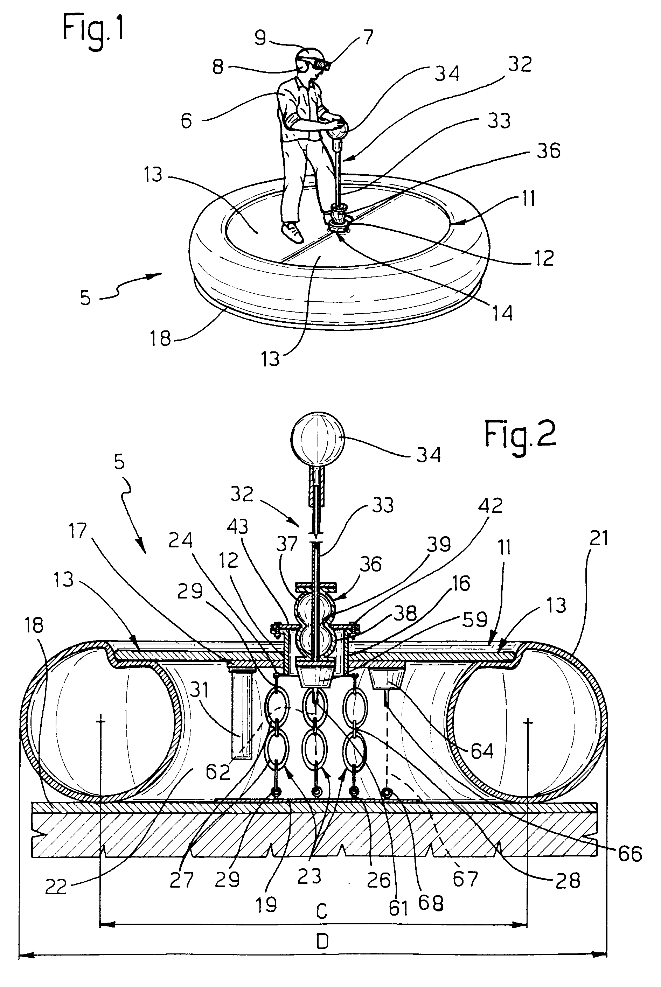

With reference to Figure 1, number 5 indicates a stand for supporting the operator or player 6 of a virtual-reality simulation system, in particular a virtual-reality videogame, which system comprises a computer (not shown) programmed to generate a variable virtual-reality environment, and audio-visual means for transmitting to player 6 audio and visual sensations relative to said environment.

The audio-visual means may comprise a display in the form of glasses 7, and an earpiece 8 incorporated in glasses 7. Glasses 7 and earpiece 8 are connected in known manner to the output of the computer, and may be fitted to a helmet 9 worn by the player during simulation. Alternatively, the transmitting means may comprise a monitor for the visual and loudspeakers for the audio sensations.

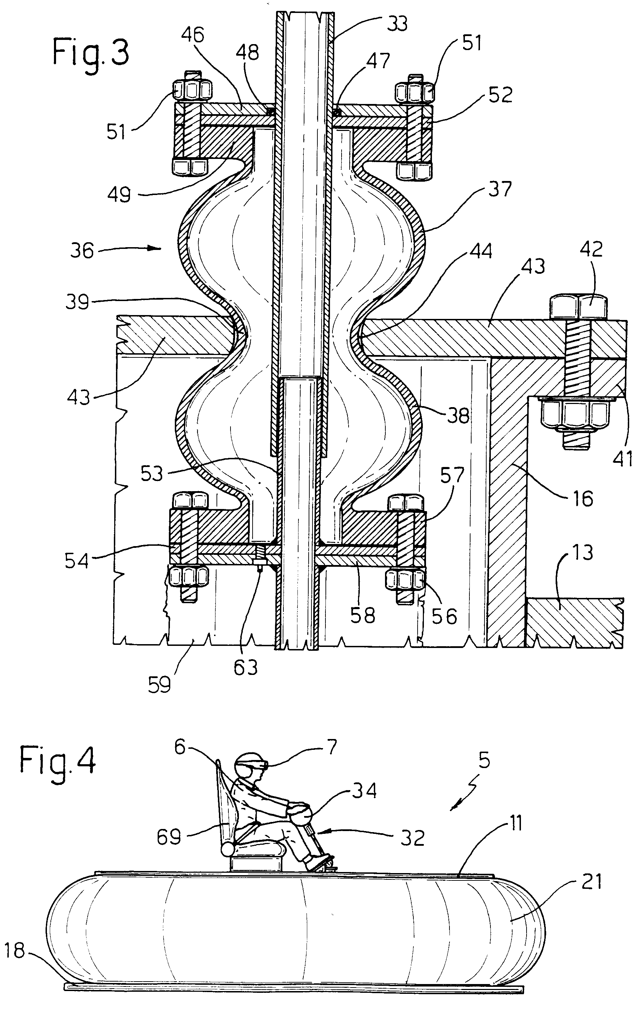

Stand 5 comprises a circular top platform 11 with a central hole 12. In particular, platform 11 comprises two semicircular plates 13 fitted to a centering body 14 comprising a vertical cylinder 16 (Figure 2) fitted to a horizontal annular flange 17. Cylinder 16 and flange 17 are made of metal and welded to each other, and the two semicircular plates 13 are centered by cylinder 16 and bolted to flange 17.

Stand 5 also comprises a circular bottom platform 18, which rests on the floor, is larger in diameter than top platform 11, and is fitted to a circular metal flange 19 of substantially the same diameter as flange 17. Top platform 11 is supported by bottom platform 18 via elastic means comprising a bladder 21 of elastomeric material enabling elastic inclination of top platform 11 in any direction.

Bladder 21 is toroidal and defines an ample inner compartment 22. More specifically, bladder 21 may be that of an industrial vehicle, e.g. a tractor, tire, and may be bonded coaxially to platform 18 at the bottom and platform 11 at the top.

Top platform 11 is centered in relation to bottom platform 18 by three elastic ties 23 secured between pairs of rings 24 and 26 fitted to cylinder 16 and flange 19. The three pairs of rings 24, 26 are spaced 120° apart about the vertical axis of stand 5; each tie 23 comprises a number of rubber rings 27, two of which are connected by a tensioning joint 28; and the end rings 27 of each tie 23 are secured to the respective pair of rings 24, 26 by two spring-catches 29.

The diameter of top platform 11 is advantageously between the outside diameter D of bladder 21 and the diameter C of the center of the cross section of bladder 21; bladder 21 is inflated to a predetermined pressure so that its elastic action is adjustable; and the section of bladder 21 is partly deformed under the weight of platform 11 and player 6 and by virtue of the action of ties 23, as shown in Figure 2.

During play, bladder 21 automatically compensates for any stress produced by a shift in the weight of the player at any point on platform 11, so that no detecting means or additional devices are required to compensate for deformation in relation to the idle position of platform 11. Moreover, bladder 21 also provides for protecting stand 5 and ensuring the safety of both the player and onlookers, with no need for a barrier.

The inner compartment 22 of bladder 21 houses rigid means for limiting displacement of top platform 11; which rigid means comprise three columns 31 (only one shown in Figure 2) of appropriate length, fitted 120° apart to flange 17, and which prevent player 6 (Figure 1) from falling in the event of sudden deflation of bladder 21, e.g. as a result of vandalism.

Stand 5 also presents a device for controlling virtual movements in the computer-generated environment, and which comprises a control stick 32 in turn comprising a hollow shaft or tube 33. Tube 33 is connected at the top to a ball 34 of such a diameter as to be operated by player 6 with both hands, and is connected at the bottom to centering body 14 by an elastic, omnidirectional, tension-adjustable joint. More specifically, said joint is pneumatic, and comprises a special bladder 36 (Figure 2) made of elastomeric material and comprising two convex half-bladders 37 and 38 communicating with each other via a small-diameter intermediate annular portion 39.

Cylinder 16 of centering body 14 terminates at the top with a flange 41 (Figure 3), which is fitted by means of bolts 42 with two half-flanges 43 presenting a central hole 44 engaging intermediate portion 39 of bladder 36. Tube 33 is fitted with a flange 46 presenting a groove 47 for a sealing ring 48; and half-bladder 37 presents at the top an integral flange 49, which is fitted to flange 46 by means of bolts 51 and via the interposition of a counterflange 52 engaging sealing ring 48.

The bottom of tube 33 is welded to a second tube 53, which terminates at the bottom with a further counterflange 54 fitted, by means of bolts 56, with a flange 57 integral with bottom half-bladder 38. Counterflange 54 is also fitted by bolts 56 with a flange 58 for supporting a first known joystick type control member 59; and an element 61 (Figure 2) of joystick 59, on the opposite side to flange 58, is connected in known manner to flange 19 by a tie 62.

Flange 58 and counterflange 54 are fitted through with a valve 63 (Figure 3) for inflating bladder 36, so that joystick 59 is integral with, and its movements amplified by, control stick 32. Moreover, joystick 59 also acts as a transducer for transmitting the movements of control stick 32 to the computer, and cables may be threaded through tubes 33 and 53 to connect the computer to helmet 9 of player 6 (Figure 1).

Finally, stand 5 also comprises a second joystick type control member 64 (Figure 2) fitted directly to flange 17, and presenting an element 66 connected by a tie 67 to a further ring 68 on flange 19, so that joystick 64 is integral with top platform 11 and acts as a transducer for transmitting the movements of platform 11 to the computer.

Stand 5 in Figures 1 to 3 operates as follows.

Player 6 (Figure 1) stands on platform 11, puts on helmet 9 together with glasses 7 and earpiece 8, and grips ball 34 with both hands to operate control stick 32 and control the virtual movements of stand 5 in relation to the environment generated by the computer via glasses 7. Joystick 59 (Figure 2) transmits the movements of control stick 32 to the computer, which accordingly modifies the generated environment to simulate the displacement of stand 5 in relation to the virtual-reality environment, so that the sensation of movement of platform 11 immediately imparted to player 6 is perfectly correlated with the virtual environment simulated by the computer, i.e. is experienced audio-visually by player 6.

Control stick 32 is operated by player 6 using the whole body and by balancing and shifting his weight naturally over platform 11. For which purpose, control stick 32 may be equipped with a safety strap or line, which is hooked on to player 6 to operate control stick 32 while walking about the axis of stand 5 on platform 11.

At any rate, a shift in the weight of the player produces, in the shift direction, a corresponding inclination of platform 11, which is compensated accordingly by deformation of bladder 21, and is detected by joystick 64, which causes the computer to generate audio-visual stimuli relative to three-dimensional movements in virtual sea, land, air or space environments.

In the Figure 4 variation, top platform 11 is fitted with a seat 69 so located that control stick 32 is located between the legs of player 6 and operated from a sitting position; and player 6 reacts in the same way as previously to virtual environment stimuli by shifting his weight in seat 69 to tilt top platform 11.

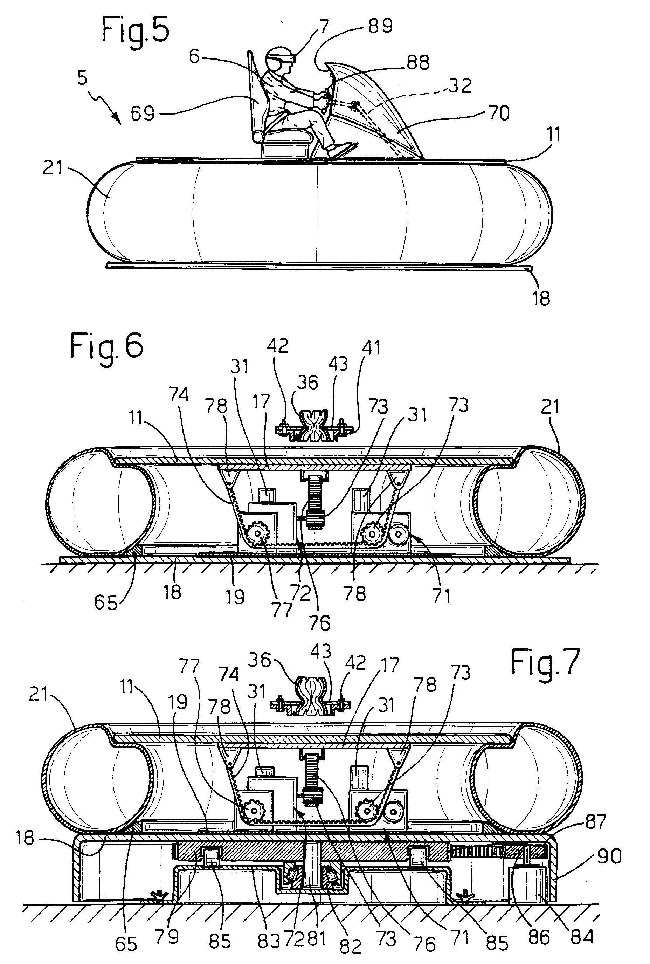

In the Figure 5-7 embodiment, top platform 11 is again fitted with a seat 69, but control stick 32 is housed inside a column 70 terminating at the top with a control panel 89, and itself terminates at the top with a C-shaped steering wheel 88 operated like the control stick of an aeroplane. Top platform 11 is connected to bottom platform 18 by bladder 21 and three ties 23 (not shown in Figures 6 and 7); the three columns 31 are fitted to bottom flange 19 as opposed to top flange 17; and bladder 21 is bonded to the curved surface of an annular support 65 fitted to bottom platform 18.

As opposed to being tilted directly by the shift in weight of player 6, platform 11 is tilted by a pair of servomotors 71, 72 fitted to flange 19 and each activating a pinion 73 engaged by a toothed belt 74, 76. Each belt 74, 76 also engages a second pinion 77 fitted to flange 19, and presents two ends 78 fitted to diametrically-opposite points of flange 17. Servomotors 71, 72, pinions 77 and belts 74, 76 operate in two perpendicular planes through the axis of stand 5, so that platform 11 may be tilted in any direction, e.g. within an angle of 10°, by appropriately combining the rotation of servomotors 71 and 72.

In the Figure 5-7 embodiment, top platform 11 is feedback tilted by servomotors 71, 72 as a function of the shift in weight of player 6 in seat 69. As for the rest, stand 5 in Figures 5-7 operates in the same way as in Figures 1-3 and therefore requires no further description.

As opposed to resting on the floor, bottom platform 18 in the Figure 7 variation is fitted to a strong circular plate 79 fitted axially with a column 81 engaging a thrust bearing 82. Bearing 82 is fitted to a circular base 83 in turn fitted to the floor, and plate 79 is rotated on bearing 82 by a servomotor 84 fitted to base 83.

Servomotor 84 is fitted with a pulley 86 for transmitting rotation to plate 79 by means of a belt 87, and plate 79 presents a number of radial-axis wheels 85 rolling along an annular portion of base 83 to relieve bearing 82 of most of the load weighing on bottom platform 18.

As before, the player controls joystick 59 to virtually displace stand 5 using steering wheel 88; platform 11 is tilted by the player shifting his weight in seat 69, as in Figure 6; and, using the control buttons on panel 89, the player controls servomotor 84 to rotate bottom platform 18, together with top platform 11, in the desired direction on bearing 82.

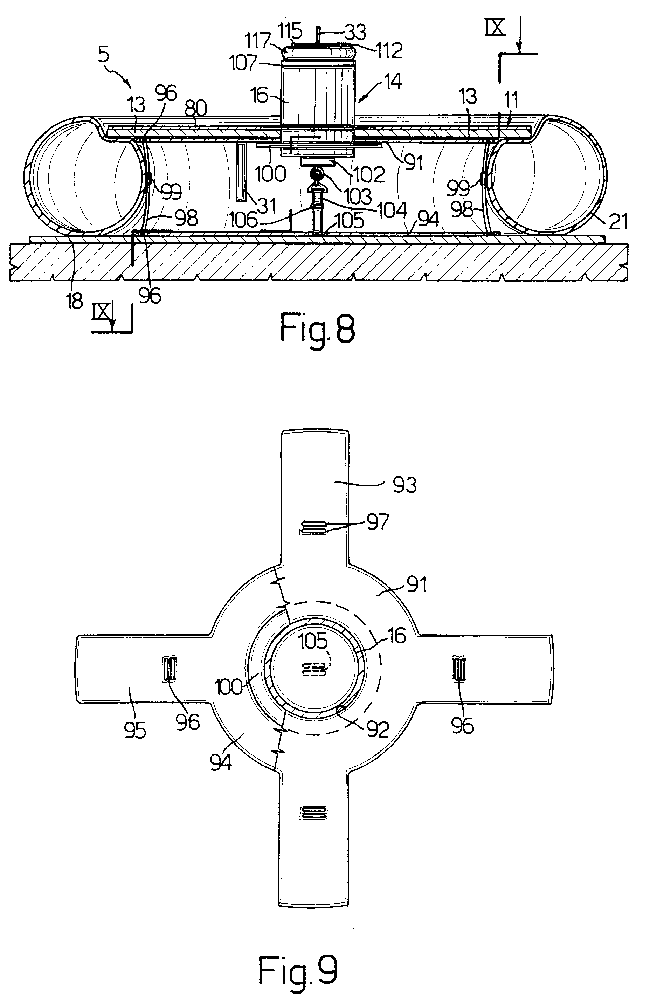

In the Figure 8-10 embodiment, bottom platform 18 and the two semicircular plates 13 of top platform 11 are made of wood; top platform 11 presents a cover 80 of nonslip material, and is fitted underneath with a metal flange 91 (Figure 9) presenting a circular central opening 92 and four radial arms 93; bottom platform 18 is fitted with a further metal flange 94 presenting four radial arms 95; and each arm 93, 95 presents a connecting element comprising a bar 96 formed by two parallel slits 97.

A tie comprising a belt 98 (Figure 8) is connected between each corresponding pair of bars 96 of flanges 91 and 94, and presents a spring-catch 99, e.g. of the type used on vehicle seat-belts, for tensioning and adjustably securing belt 98. The distance between bars 96 and the axis of stand 5 is such that each belt 98 extends by a given angle about the vertical section of bladder 21, which therefore keeps belt 98 taut when inflated; and flange 91 or 94 may be fitted with columns 31 to prevent the player from falling in the event of bladder 21 being deflated.

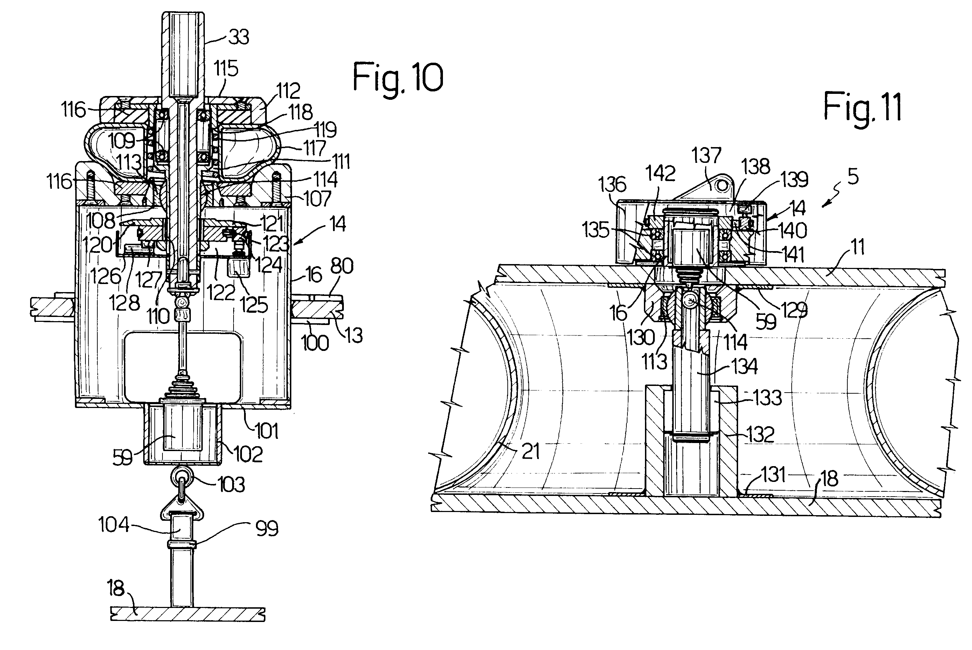

Cylinder 16 of centering body 14 presents a flange 100 fitted to flange 91 by a number of screws, and is closed at the bottom by a wall 101 (Figure 10) presenting a downward-extending central compartment 102 housing joystick 59; joystick 59 is connected at the top to tube 33 of control stick 32, which may be fitted with a ball, as in Figure 1, or with a steering wheel; the bottom of compartment 102 is fitted with a ring 103 in which is inserted a support for a further belt 104 (Figure 8); and belt 104 is connected to a central bar 105 on flange 94, and is tensioned adjustably by a respective spring-catch 106.

Cylinder 16 is closed at the top by a wall 107 presenting a shaped top surface and an annular seat 108 (Figure 10); tube 33 rotates, by means of rolling bearings 109 and 110, inside a sleeve 111 angularly-fixed in relation to cylinder 16; between seat 108 and sleeve 111, there is fitted a spherical joint comprising a ring 113 fitted inside seat 108, and a ball 114 presenting a through hole and fitted about sleeve 111; and the top end of sleeve 111 is fitted with a flange 115 presenting a vertical edge 112.

Between two retaining rings 116 on flange 115 and wall 107, an annular bladder 117 is fitted coaxially with tube 33 and inflated to a predetermined pressure; between ring 113 and a shoulder 118 of sleeve 111, a helical compression spring 119 is fitted coaxially with bladder 117; and spring 119 and bladder 117 provide for restoring control stick 32 elastically to the central position.

Sleeve 111 is fitted towards the bottom end with a disk 120, the top surface of which presents an inclined annular portion 121, which is arrested against the bottom surface of wall 107 to define the maximum permissible inclination of tube 33; and disk 120 presents a pulley 122 connected by a belt 123 to a second pulley 124 integral with the rotary part of a potentiometer 125 fitted to a disk 126 integral with tube 33.

Potentiometer 125 is a transducer for transmitting the angular movements of control stick 32 in relation to platform 11, and therefore constitutes a second control member whose signal is supplied to the computer in lieu of those of joystick 64 in Figure 2. Finally, a tenon 127 projects downwards from pulley 122 and cooperates with a stop 128 on disk 126 to define the maximum permissible rotation of tube 33; and both the control members 59 and 125 connected to the computer are therefore housed inside cylinder 16.

Operation of stand 5 in Figures 8-10 differs from that of Figures 1-4 in that, as player 6 moves over platform 11, tube 33 of control stick 32 may be rotated about its axis, thus rotating disk 126 in relation to disk 120 of sleeve 111, so that belt 123 rotates pulley 124 to activate potentiometer 125.

Consequently, whereas joystick 59 provides for signalling to the computer the inclination of tube 33 in any direction, potentiometer 125 signals the rotation of tube 33 inside sleeve 11 and, hence, in relation to platform 11, and causes the computer to generate audio-visual stimuli relative to three-dimensional movements in the virtual environment in the same way as the signals of joystick 64 in Figure 2.

The embodiment of stand 5 in Figure 11 is especially designed for use in the home. In this case, no ties are provided connecting top and bottom platforms 11 and 18; top platform 11 may be formed in one piece, and is fitted underneath with a flange 129 integral with a ring 130; and bottom platform 18 is fitted with a flange 131 integral with a sleeve 132, which houses a shock-absorbing piston 133 fitted to a rod 134 connected to ring 130 by a spherical joint 113, 114 identical to that in Figure 10, so that any injury caused by deflation of bladder 21 is safeguarded against by rod 134, and vertical displacement of rod 134 is softened by piston 133.

Platform 11 is fitted on top with cylinder 16 of centering body 14; cylinder 16 is fitted with two rolling bearings 135 supporting in rotary manner a casing 136; and casing 136 presents an appendix 137 to which is fitted a manual control rod (not shown) forming the control stick and for directly controlling inclination of platform 11 in any direction. Platform 11 may also be tilted by the player shifting his weight on it.

Joystick 59 is housed inside cylinder 16, and is connected to the hollow top end of rod 134 to supply the computer with a signal indicating the inclination of both the control stick and platform 11; and casing 136 defines a compartment 138 housing a second control member comprising a potentiometer 139 similar to potentiometer 125 in Figure 10 and for defining the angular position of casing 136 and, hence, of the control stick in relation to cylinder 16.

For which purpose, potentiometer 139 is integral with casing 136, and its rotary part is integral with a pulley 140 connected by a belt 141 to a second pulley 142 fitted to cylinder 16; and stop means (not shown) are provided between cylinder 16 and casing 136 for defining the maximum permissible rotation of casing 136. The control members 59 and 139 connected to the computer are therefore housed respectively inside cylinder 16 and casing 136, and therefore substantially inside centering body 14 of stand 5.

Stand 5 in Figure 11 operates in the same way as the Figure 8-10 embodiment and therefore requires no further description.

As compared with the controls of known virtual-reality simulators, the advantages of stand 5 according to the present invention will be clear from the foregoing description. In particular, bladder 21 provides for automatically compensating the inclination of top platform 11, and for protecting player 6 and any onlookers against personal injury; columns 31 and rod 134 safeguard player 6 against injury caused by sudden deflation of bladder 21; and control member 59 provides for instantaneously communicating the player-controlled movements in the virtual environment to the computer.

As such, the sensations transmitted to player 6 by stand 5 and relative to the virtual environment are perfectly correlated with what the player would mentally expect. In a simulation context, therefore, stand 5 performs a sensorial feedback function, and provides for immediate sensorial and body response to the controls imparted by the player; which interaction between the sensations experienced by the player and the events and environments generated by the computer provides for eliminating any discomfort (kinetosis) to the player.

Clearly, changes may be made to stand 5 as described and illustrated herein without, however, departing from the scope of the present invention. For example, as opposed to virtual-reality videogames, stand 5 may also be applied to simulation systems for driving, flight or space training or aptitude tests, or for scientific instruction or broadcasting purposes.

Moreover, control stick 32 and/or column 70 may be equipped with a decorative cover; and, in the Figure 5-7 embodiment, servomotors 71, 72, 84 may be provided with pulsating controls for sharply lowering or jolting top platform 11, e.g. to achieve a more realistic reaction to given simulated events.

## Claims

1. A stand for supporting the operator of a virtual-reality amusement system comprising programmed generating means for generating a variable virtual-reality environment, and audio-visual transmitting means (7, 8) for transmitting to the operator (6) audio and visual sensations relative to said environment; said stand comprising manual control means (32) for controlling virtual displacement of the stand (5) in said environment; and the stand being characterized by comprising a top platform (11) supported by elastic means (21) permitting elastic inclination of the platform (11) in any direction; said inclination being substantially produced by a shift in the weight of the operator on said platform (11) in response to sensations received from said audio-visual means (7, 8).

2. A stand as claimed in Claim 1, characterized in that said elastic means comprise at least a toroidal bladder (21) inflated to a predetermined pressure.

3. A stand as claimed in Claim 2, characterized in that said top platform (11) is substantially circular; said bladder (21) being coaxial with the stand (5) and being fitted to a corresponding bottom platform (18).

4. A stand as claimed in Claim 3, characterized in that said top platform (11) presents a diameter between the outside diameter (D) of said bladder (21) and the diameter (C) of the center of the cross section of said bladder (21).

5. A stand as claimed in one of the foregoing Claims, characterized in that said top platform (11) is inclined directly by a shift in the weight of the operator (6) on the top platform (11).

6. A stand as claimed in one of the foregoing Claims, characterized in that said control means comprise a control stick (32) connected by an articulated joint to the center of the stand.

7. A stand as claimed in Claim 6, characterized in that, at said articulated joint, a control member (59) is provided for controlling said generating means in such a manner as to simulate displacement of the stand (5).

8. A stand as claimed in Claim 7, characterized in that said control member (59) is a joystick type, and is connected between said top platform (11) and said bottom platform (18).

9. A stand as claimed in Claim 8, characterized in that said top platform (11) also presents a second control member (64, 125, 139) for producing on said transmitting means corresponding audio and/or visual sensations for transmission to the operator (6).

10. A stand as claimed in Claim 2 and one of the foregoing Claims from 3 to 9, characterized in that rigid means (31, 134) are provided between said top platform (11) and said bottom platform (18) for limiting vertical displacement of said top platform (11) in the event of sudden deflation of said bladder (21).

11. A stand as claimed in one of the foregoing Claims, characterized in that said control stick (32) comprises a shaft (33) connected by an articulated joint to said top platform (11) and presenting, at the top, a ball (34) which is gripped with both hands by the operator (6).

12. A stand as claimed in Claim 2 and one of the foregoing Claims from 3 to 11, characterized in that said top platform (11) is also connected to said bottom platform (18) by a number of adjustable ties (23, 98).

13. A stand as claimed in Claim 12, characterized in that said rigid means (31, 134) comprise at least three columns (31) housed in a portion (22) inside the toroid of said bladder (21); said columns being fitted to one of said platforms (11, 18).

14. A stand as claimed in Claims 8 and 13, characterized in that said second control member (64) is also a joystick type, and is connected to said bottom platform (18) by a further tie (67) so as to detect the inclination of the platform.

15. A stand as claimed in one of the foregoing Claims from 12 to 14, characterized in that each of said ties (23) comprises at least two elastic rings (27) connected to each other by a tensioning element (28); and two spring-catches (29) for connection to two rings (24, 26) fitted respectively to said platforms (11, 18).

16. A stand as claimed in one of the foregoing Claims from 12 to 15, characterized in that said articulated joint is in the form of an adjustable elastic joint (36); said top platform (11) being formed in two halves (13) fitted to a centering body (14) supporting said elastic joint (36).

17. A stand as claimed in Claim 16, characterized in that said elastic joint (36) comprises two half-bladders (37, 38) communicating with each other and respectively connected to said shaft (33) and to said control member (59); said elastic joint (36) being adjustable by varying the pressure of said two half-bladders (37, 38).

18. A stand as claimed in Claim 17, characterized in that said centering body (14) presents a pair of half-flanges (43) having a central hole (44) engaging an intermediate portion (39) enabling communication between said two half-bladders (37, 38).

19. A stand as claimed in one of the foregoing Claims from 15 to 18, characterized in that said top platform (11) presents a seat (69) adjacent to said control stick (32), and is inclined by a shift in the weight of the operator in said seat (69).

20. A stand as claimed in Claim 19, characterized in that provision is made for a pair of servomotors (71, 72) feedback-operated by a shift in the weight of the operator (6) so as to incline said top platform (11) in two corresponding perpendicular planes through the axis of the stand (5).

21. A stand as claimed in Claim 20, characterized in that said servomotors (71, 72) are fitted to said bottom platform (18), and each activate a pinion (73) engaging a corresponding toothed belt (74, 76) having two ends (78) fitted to said top platform (11).

22. A stand as claimed in Claim 21, characterized in that said bottom platform (18) is mounted for rotation on a vertical-axis bearing (82) fitted to a fixed base (83); means (84) being provided for rotating said bottom platform (18) by means of manual controls activated by the operator (6).

23. A stand as claimed in Claim 22, characterized in that said top platform (11) presents a control panel (89) housing said shaft (33) and presenting a steering wheel (88) connected to said shaft (33).

24. A stand as claimed in Claim 10, characterized in that said control members (59, 125; 59, 139) are both housed in a centering body (14) fitted to said top platform (11); said second control member comprising a potentiometer (125, 139) for detecting the rotation of said control stick (32) in relation to said top platform (11).

25. A stand as claimed in Claim 10 or 24, characterized in that said articulated joint comprises a spherical joint (113, 114) located between said top platform (11) and a rotary element (111, 134) rotating in relation to said control stick (32).

26. A stand as claimed in Claims 24 and 25, characterized in that said potentiometer (125, 139) is activated by a pair of pulleys (122, 124; 140, 142) and a belt (123, 141) for transmitting to a rotary part of said potentiometer (125, 139) the rotation of said control stick (32) in relation to said top platform (11).

27. A stand as claimed in Claim 25 or 26, characterized in that said rotary element comprises a sleeve (111) in which said shaft (33) of said control stick (32) may rotate; and in that, between said centering body (14) and said shaft (33), there are provided elastic means (117, 119) comprising an annular bladder (117) and/or a helical compression spring (119), both concentric with said shaft (33).

28. A stand as claimed in Claim 27 or 28, characterized in that said shaft (33) is fitted with a disk (120) having an annular portion (121) cooperating with a wall (107) of said centering body (14) to limit the inclination of said shaft (33); means (127, 128) being provided for limiting the rotation of said shaft (33) in relation to said disk (120).

29. A stand as claimed in Claim 12 and in one of the Claims from 26 to 28, characterized in that each of said ties comprises a belt (98) connected to a respective pair of elements (96) on said platforms (11, 18); said belt (98) being tensioned adjustably by a spring-catch (99); and the elements (96) in each said pair being so located as to permit the respective said belt (98) to extend by a given angle about the vertical section of said bladder (21).

30. A stand as claimed in Claim 25 or 26, characterized in that said rotary element comprises a rod (134) slidable inside a sleeve (132) fitted to said bottom platforms (18); said control stick (32) rotating on said top platform (11) and being integral with said top platform (11) in a direction perpendicular to its axis of rotation.

31. A stand as claimed in Claim 30, characterized in that said rigid means comprise said rod (134); a shock-absorbing piston (133) being fitted to said rod (134); and said control member (59) being located between said rod (134) and said centering body (14).

32. A stand as claimed in Claim 30 or 31, characterized in that said centering body (14) is fitted in rotary manner with a casing (136) connected to said control stick; said casing (136) defining a compartment (138) housing said potentiometer (139).
